(19) Europäisches Patentamt
European Patent Office
Office européen des brevets

(11) Veröffentlichungsnummer: **0 198 369**
**B1**

(12) **EUROPÄISCHE PATENTSCHRIFT**

(45) Veröffentlichungstag der Patentschrift: **06.02.91**

(51) Int. Cl.$^5$: **C 09 B 5/62**

(21) Anmeldenummer: **86104677.9**

(22) Anmeldetag: **05.04.86**

# (54) Verfahren zur Herstellung von Perylen-3,4,9,10-tetracarbonsäurearylimiden.

(30) Priorität: **15.04.85 DE 3513358**

(43) Veröffentlichungstag der Anmeldung:
**22.10.86 Patentblatt 86/43**

(45) Bekanntmachung des Hinweises auf die Patenterteilung:
**06.02.91 Patentblatt 91/06**

(84) Benannte Vertragsstaaten:
**CH DE FR GB IT LI**

(56) Entgegenhaltungen:
**DE-A-1 807 729**
**DE-A-2 210 170**

(73) Patentinhaber: **HOECHST AKTIENGESELLSCHAFT**
**Postfach 80 03 20**
**D-6230 Frankfurt am Main 80 (DE)**

(72) Erfinder: **Spietschka, Ernst, Dr.**
**Kirchweg 3**
**D-6270 Idstein/Taunus (DE)**
Erfinder: **Tröster, Helmut, Dr.**
**Am Erdbeerstein 44**
**D-6240 Königstein/Taunus (DE)**

EP 0 198 369 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Gegenstand der Erfindung ist ein verbessertes Verfahren zur Herstellung von Perylen-3,4,9,10-tetracarbonsäurearylimiden durch Verwendung von Verbindungen, welche auf die an sich bekannte Kondensation von Perylen-3,4,9,10-tetracarbonsäure-dianhydrid oder einem Perylen-3,4,9,10-tetracarbonsäure-monoanhydrid-monoimid mit einem primären Arylamin reaktionsbeschleunigend wirken und gleichzeitig die Nachteile vermeiden, welche mit den bisher eingesetzten Kondensationshilfsmitteln verbunden sind.

Es ist bekannt, daß durch Umsetzung (Kondensation) von Perylen-3,4,9,10-tetracarbonsäure-dianhydrid mit primären Arylaminen Perylen-3,4,9,10-tetracarbonsäure-diarylimide der Formel

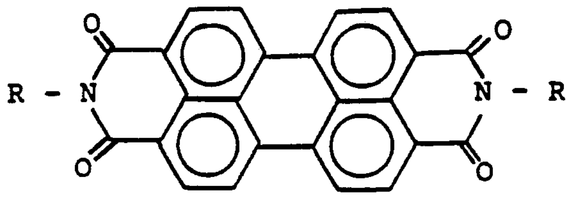

(R bedeutet hierin einen Arylrest) erhalten werden, zu denen wertvolle Farbmittel zählen.

Es ist ferner bekannt, bei dieser Kondensationsreaktion zur Erhöhung der Reaktionsgeschwindigkeit — vor allem bei Einsatz von reaktionsträgeren Arylaminen — saure, wasserabspaltende Mittel, wie Salz- oder Schwefelsäure, oder Schwermetallsalze, wie Zinkchlorid oder Zink- oder Cadmiumcarboxylate, zuzusetzen (DE—C—1 067 157 (=US—A—2905685), 1 105 085 (=GB—A—897 707), 1 230 946 (=US—A—3 332 931); DE—B—1 094 897, DE—B—1 807 729). Alle diese Kondensationshilfsmittel bringen jedoch Nachteile mit sich, welche die technische Herstellung solcher Farbmittel erschweren. Zu nennen sind hierzu Korrosionsprobleme, biespielsweise bei Verwendung von Salzsäure oder Zinkchlorid, Verluste bei den zum Teil teueren Aminkomponenten durch Nebenreaktionen — so läßt sich bei Schwefelsäurekatalyse die Bildung von Bisaryl- und Cycloarylamin nachweisen — oder Acylierung der Aminkomponente bei Einsatz von Schwermetallcarboxylaten, wie Zinkacetat, verbunden mit der Notwendigkeit, die Schwermetalle gemäß den ökologischen Erfordernissen durch zusätzliche Maßnahmen wieder abzutrennen.

Es wurde gefunden, daß man Perylen-3,4,9,10-tetracarbonsäurearylimide der Formel (1)

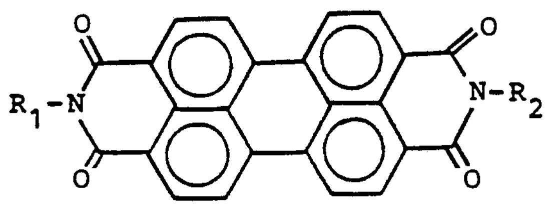

(1)

in welcher $R_1$ einen Arylrest, wie beispielsweise einen Phenyl- oder Naphthylrest bedeutet, der am aromatischen Kern durch gegebenenfalls substituierte Alkyle, Cycloalkyl-, Alkoxy-, Aryloxy- Arylazo- oder Nitrogruppen oder Halogenatome substituiert sein kann, und $R_2$ ein Wasserstoffatom oder einen gegebenenfalls substituierten $Alkyl_{\overline{C_1-C_8}}$ oder Arylrest, wie beispielsweise einen Phenyl-, oder Naphthylrest, der am aromatischen Kern durch gegebenenfalls substituierte Alkyl-, Cycloalkyl-, Alkoxy-, Aryloxy-, Arylazo- oder Nitrogruppen oder Halogenatome substituiert sein kann, bedeuten, wobei $R_1$ und $R_2$, falls beide einen Arylrest bedeuten, gleich oder verschieden sein können, in vorteilhafter Weise herstellen kann, indem man Perylen-3,4,9,10-tetracarbonsäure-dianhydrid oder ein Perylen-3,4,9,10-tetracarbonsäure-monoanhydrid-monoimid der Formel (2)

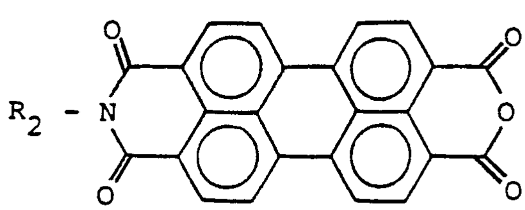

(2)

in welcher $R_2$ die vorstehend genannte Bedeutung hat, mit einem primären Arylamin der Formel (3)

$$R_1—NH_2 \qquad (3)$$

in welcher $R_1$ die vorstehend genannte Bedeutung hat, in Gegenwart von Dialkylaminen der Formel (4)

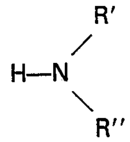

(4)

in welcher R', R'' gleiche oder verschiedene geradkettige $Alkyl_{C_1-C_6}$ oder verzweigte $Alkyl_{C_3-C_6}$ oder $Cycloalkyl_{C_5-C_6}$ gruppen bedeuten, die gegebenenfalls substituiert sind durch Hydroxy-, $Alkoxy_{C_1-C_4}$, $Alkyl_{C_1-C_4}$ amino- oder Phenyl- oder Naphthylgruppen, die am aromatischen Kern durch $Alkyl_{C_1-C_4}$, $Alkoxy_{C_1-C_4}$ oder $Alkyl_{C_1-C_4}$ -amino-gruppen oder Halogenatome substituiert sein können, oder in Gegenwart von Dialkylaminen in welchen R' und R'' gemeinsam mit dem Stickstoffatom einen 5- oder 6-gliedrigen heterocyclischen Ring bilden, beispielsweise einen ggfs. durch niedere Alkylgruppen oder eine Phenylgruppe substituierten Piperidin-, Piperazin-, Morpholin- oder Pyrrolidinring, bei Temperaturen von 100 bis 300°C, vorzugsweise von ca. 110 bis ca. 250°C kondensiert.

Die Dialkylamine der genannten Formel (4) eignen sich für die inredestehende Kondensationsreaktion vorzüglich als Katalysatoren. Sie besitzen eine den weiter oben genannten, bisher eingesetzen bekannten Kondensationsmitteln vergleichbare reaktionsbeschleunigende Wirkung ohne deren Nachteile aufzuweisen. Nach beendeter Umsetzung lassen sie sich in einfacher, ökologisch vorteilhafter Weise, gegebenenfalls gemeinsam mit dem überschüssigen Arylamin der genannten Formel (3) und einem ggfs. zugesetzten inerten Verdünnungsmittel aus den Reaktionsmutterlaugen destillativ wiedergewinnen und so direckt einer erneuten Verwendung zuführen. Sie können vorteilhaft aber auch selbst anstelle eines Verdünnungsmittels als Reaktionsmedium dienen. Nebenreaktionen werden hierbei nicht beobachtet.

Da Kondensationsreaktionen der inredestehenden Art meistens quantitativ verlaufen, beitet sich zudem die Möglichkeit, das gebildete Reaktionsprodukt auf besonders wirtschaftliche Weise unter Umgehung einer technisch aufwendigen Filtration aus organischem Medium mit anschließender Trocknung zu isolieren, indem man nach beendeter Reaktion die flüchtigen Anteile aus der Reaktionsmischung abdestilliert, wobei das Verfahrensprodukt in reiner Form als trockener Destillationsrückstand anfällt.

Beispiele für geeignete Dialkylamine der genannten Formel (4) sind Dimethyl-, Dipropyl-, Dihexyl-, Diisopropyl- und Diisobutylamin, ferner N-Methyl-n-butylamin, Di-(2-ethylhexyl)-amin, Dicyclohexylamin, Diethanolamin, Dipropanolamin, N-$Alkyl_{C_1-C_6}$ ethanolamin, Cyclohexylethanolamin, N-Methyl-, N-Ethylaminopropanol-2, N-Methylaminopropandiol-2,3, Dimethylethylendiamin, N-Benzylmethylamin, N-Benzylethylamin, N-Isopropylbenzylamin, N-Benzylethanolamin, Dibenzylamin, Piperidin, sym.-3,5-Dimethylpiperidin, 3-(Hydroxymethyl)-piperidin, 2-Ethylpiperidin, 4-Benzylpiperidin, Piperazin, N-Methylpiperazin, N-Phenylpiperazin, 2,6-Dimethylpiperazin, Morpholin, 2,6-Dimethylmorpholin, und Pyrrolidin.

Für die Kondensationsreaktion sind 0,05 mol Dialkylamin pro mol Perylen-3,4,9,10-tetracarbonsäure-dianhydrid zur Erzielung einer deutlichen Reaktionsbeschleunigung ausreichen. Bevorzugt werden jedoch zwischen ca. 0,1 mol und ca. 5 mol Dialkylamin pro mol Dianhydrid bzw. Monoanhydrid-monoimid eingesetzt. Es können aber auch wesentlich größere Mengen angewandt werden, was sich insbesondere dann empfiehlt, wenn das Dialkylamin gleichzeitig als Verdünnungsmittel dienen soll. Die Einsatzmenge nach oben wird im allgemeinen nur durch wirtschaftliche Gesichtspunkte begrenzt. Es ist vorteilhaft, ein Dialkylamin der Formel (4) einzusetzen, das einen Siedepunkt von etwa 100°C bis etwa 300°C besitzt.

Bemerkenswert ist, daß tertiäre Alkylamine, wie beispielsweise Triethyl- oder Triethanolamin, im Gegensatz zu den erfindungsgemäß zur Anwendung gelangenden Dialkylaminen, keine entsprechende Wirkung zeigen. Es war überraschend und nicht voraussehbar, daß sich sekundäre Alkylamine als Katalysatoren für die inredestehende Kondensationsreaktion eignen, da zu erwarten war, daß durch bevorzugte Reaktion des Anhydrids bzw. Monoanhydrid-monoimids mit dem stärker basischen Dialkylamin die Umsetzung mit der schwächeren Arylaminbase (Formel 3) und somit die Bildung der Arylimide (Formel 1) erschwert würde.

Die erfindungsgemäße Kondensation kann ggfs. auch unter Druck vorgenommen werden. Die Reaktion kann unter Zusatz von inerten Verdünnungsmitteln, wie Dimethylformamid, N-Methylpyrrolidon, o-Dichlorbenzol, Nitrobenzol, Chinolin oder 2-Ethylhexanol erfolgen. Bevorzugt wird die Reaktion jedoch ohne Zusatz weiterer Verdünnungsmittel in dem betreffenden Gemisch aus Arylamin (Formel 3) und Dialkylamin (Formel 4) durchgeführt. Die Reaktionsdauer beträgt ca. 0,5—12 Stunden.

Die Abtrennung des Reaktionsproduktes kann in üblicher Weise, gegebenenfalls nach Verdünnen der Reaktionsmischung, beispielsweise mit einem niedrigsiedenden Alkohol, wie Methanol, durch Filtration erfolgen. Ökologisch vorteilhaft und technisch besonders wirtschaftlich ist est jedoch, das Gemisch aus überschüssigem Arylamin und Dialkylamin nach quantitativer Umsetzung destillativ, gegenbenenfalls im Vakuum, abzutrennen, so daß das Reaktionsprodukt als trockener Rückstand verbleibt. Für diese Verfahrensweise sind technische Apparaturen, wie beispielsweise Trockenpfanne oder Schaufeltrockner besonders geeignet. Das hierbei feinpulvrig anfallende Produkt kann direkt für gegebenenfalls noch erforderliche Finishoperationen eingesetzt werden.

Für druckloses Arbeiten, bei dem das während der Reaktion abgespaltene Wasser kontinuierlich

abdestilliert wird, wird man ein Dialkylamin auswählen, dessen Siedebereich über der Reaktionstemperatur liegt.

Die Ausgangsprodukte der Formel (2) können nach den in den DE—A—3 017 185 und 3 309 060 beschriebenen Verfahren erhalten werden.

Als Arylamine der Formel (3) kommen beispielsweise in Betracht Anilin, 2-, 3-, 4-Methylanilin, 2,5-, 3,4-, 3,5-Dimethylanilin, 4-Isopropylanilin, 4-Cyclohexylanilin, 4-Methoxy-2-methylanilin, 4-Methoxy-, 4-Ethoxyanilin, 2,4- oder 2,5-Dimethoxyanilin, 3- oder 4-Chlor-, Brom-, Jodanilin, 4-Fluoranilin, 3,5-Bistrifluormethylanilin, 2,4-, 3,5-Dichloranilin, 2-Methyl-5-chloranilin, 3-, 4-Nitroanilin, 4-Phenoxy-, 4-(4'-Chlorphenoxy)-, 4-(4'-Methoxyphenoxy)-anilin, 4-Aminoazobenzol, 3-Aminobenzanthron, 1-Aminopyren oder 2-Aminoanthrachinon.

Von einigen Verfahrensprodukten, die polymorphes Verhalten zeigen, können in Abhängigkeit von Art und Menge des angewandten Dialkylamins und der Reaktionstemperatur verschiedene Kristallmodifikationen erhalten werden. So lassen sich beispielsweise neben der lange bekannten α-Modifikation des Perylen-3,4,9,10-tetracarbonsäure-N,N-bis-3',5'-dimethylphenylimids nach dem erfindungsgemäßen Verfahren auch die in jüngerer Zeit bekanntgewordene β- und γ-Modifikation (CA 84, 166251s; EP—A—0 023 191A1), die ebenfalls wertvolle Pigmente darstellen, in besonders vorteilhafter Weise, ohne Zwischenisolierung der α-Modifikation mit anschließender Phasenumwandlung, auf direktem Weg herstellen.

Die nachfolgenden Beispiele erläutern die erfindungsgemäßen Verfahrensweisen. Die angegebenen Prozentangaben beziehen sich, wenn nicht anders angegeben, auf das Gewicht.

Beispiel 1

Eine Mischung aus 39,2 g (0,1 mol) Perylen-3,4,9,10-tetracarbonsäure-dianhydrid, 200 g (1,6 mol) 3,5-Dimethylanilin und 1,0 g (0,0095 mol) Diethanolamin wird unter kontinuierlichem Abtreiben des Reaktionswassers mit einem schwachen Stickstoffstrom 6 Stunden bei 180°C gerührt. Die Reaktionsmischung wird anschließend bei 60°C mit 200 ml Methanol verdünnt, und das Umsetzungsprodukt durch Filtration isoliert. Das rote, kristalline Produkt wird mit Methanol gewaschen, der methanolfeuchte Filterkuchen 1 Stunde mit 600 ml 5%iger Kalilauge bei 80°C behandelt, dann abgesaugt, mit heißem Wasser neutral gewaschen und schließlich getrocknet.

Man erhält 58,3 g des Diimids der Formel (1) mit

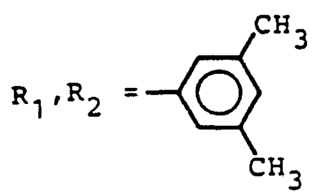

in der α-Modifikation, was einer Ausbeute von 97,5% der Theorie entspricht.

Vergleichsbeispiel 1a

Bei Ausführung von Beispiel 1 ohne Zusatz von Diethanolamin erhält man 25,1 g des gleichen Endprodukts, was einer Ausbeute von 42,0% der Theorie entspricht.

Beispiel 2

19,6 g (0.05 mol) Perylen-3,4,9,10-tetracarbonsäure-dianhydrid werden mit einer Lösung von 21,0 g (0,2 mol) Diethanolamin in 97 g (0,8 mol) 3,5-Xylidin 1 Stunde bei 180°C behandelt. Nach Aufarbeitung gemäß Beispiel 1 wird das Reaktionsprodukt, welches mit dem nach Beispiel 1 erhaltenen Produkt chemisch identisch ist, jedoch in der β-Kristallphase vorliegt, in Form rein scharlachroter Kristalle erhalten.

Gewonnen werden 29,5 g, was einer Ausbeute von 98,7% der Theorie entspricht.

Beispiel 3

Arbeitet man gemäß Beispiel 1, jedoch mit dem Unterschied, daß anstelle von Diethanolamin 34,8 g (0,4 mol) N-Butylmethylamin eingesetzt werden und die Reaktionszeit bei 120°C 2 Stunden beträgt, so erhält man 54,9 g des chemisch gleichen Produkts, aber in Form der blaustichig roten γ-Modifikation, was einer Ausbeute von 91,8% der Theorie entspricht.

Beispiel 4

Verfährt man wie in Beispiel 1 angegeben, jedoch mit dem Unterschied, daß man das Diethanolamin durch 8,7 g (0,1 mol) Morpholin ersetzt und 6 Stunden bei 120°C reagieren läßt, so erhält man 59,0 g des chemisch gleichen Produkts, aber in der γ-Kristallform, was einer Ausbeute von 98,7% der Theorie entspricht.

Ein ähnliches Ergebnis erzielt man, wenn man bei gleicher Verfahrensweise anstelle des Morpholins 34,0 g Piperidin (0,4 mol) oder 40,0 g N-Methylpiperazin (0,4 mol) verwendet.

Beispiel 5

Eine Suspension von 19,6 g (0,05 mol) Perylen-3,4,9,10-tetracarbonsäure-dianhydrid, 20,0 g (0,16 mol) 3,5-Dimethylanilin und 200 g (1,9 mol) Diethanolamin wird auf 180—190°C erwärmt. Nach einer Reaktionsdauer von 3 Stunden wird das Reaktionsprodukt gemäß den Angaben des Beispiels 1 isoliert. Man erhält 26,6 g des gemäß Beispiel 3 erhaltenen Reaktionsproduktes, was einer Ausbeute von 89,0% der Theorie entspricht.

Beispiel 6

Eine Mischung aus 19,6 g (0,05 mol) Perylen-3,4,9,10-tetracarbonsäure-dianhydrid, 171,8 g (0,75 mol) 3,5-Bis-Trifluormethylanilin und 25,0 g (0.24 mol) Diethanolamin läßt man 4 Stunden bei 180°C reagieren. Nach üblicher Aufarbeitung (vgl. Beispiel 1) werden 37,4 g rein orangefarbenes Reaktionsproduckt der Formel (1) mit

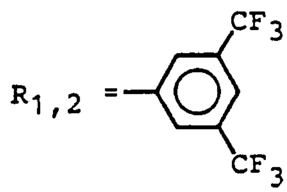

erhalten, was einer Ausbeute von 91,9% der Theorie entspricht.

Beispiel 7

Verfährt man, wie in Beispiel 6 beschrieben, jedoch mit dem Unterschied, daß man das 3,5-Bis-Trifluormethylanilin durch 118,3 g 3,5-Dichloranilin ersetzt, so erhält man 31,8 g des entsprechenden Diimids der Formel (1) mit

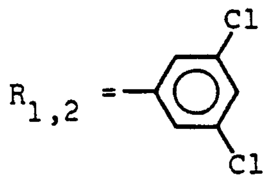

in dunkelvioletten Kristallen, was einer Ausbeute von 97,4% der Theorie entspricht.

Beispiel 8

Verfährt man, wie in Beispiel 6 beschrieben, jedoch mit dem Unterschied, daß man das 3,5-Bis-Trifluormethylanilin durch 70 g Anilin ersetzt und 2 Stunden reagieren läßt, so erhält man 53,0 g des dunkel blaustichig roten, mikrokristallinen Bis-Phenylimids der Formel (1) mit

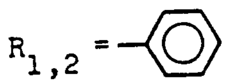

was einer Ausbeute von 97,8% der Theorie entspricht.

Beispiel 9

Eine Suspension aus 19,6 g (0,05 mol) Perylen-3,4,9,10-tetracarbonsäure-dianhydrid, 150 g (0,69 mol) 3-Jodanilin und 2,3 g (0,025 mol) 2-(Ethylamino)-ethanol wird 2 Stunden bei 180°C gerührt. Nach üblicher Isolierung (vgl. Beispiel 1) werden 38,6 g rein rotes Reaktionsprodukt der Formel (1) mit

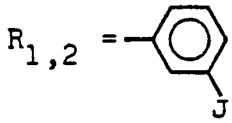

erhalten, was einer Ausbeute von 97,3% der Theorie entspricht.

Beispiel 10

39,2 g (0,1 mol) Perylen-3,4,9,10-tetracarbonsäure-dianhydrid und 78,8 g (0,4 mol) 4-Aminoazobenzol läßt man in 180 g (1,7 mol) Diethanolamin 5 Stunden bei 180—190°C reagieren. Anschließend verdünnt

man bei 80°C mit 400 ml Methanol und isoliert das rote Reaktionsprodukt wie in Beispiel 1 angegeben. Es werden 68,3 g des Bis-Azoderivats der Formel (1) mit

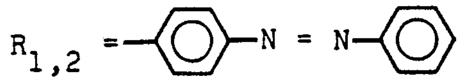

erhalten, was einer Ausbeute von 91,1% der Theorie entspricht.

Beispiel 11

In einem 1 1-V2A-Planflanschbecher mit Ankerrührer werden 98,0 g (0,25 mol) Perylen-3,4,9,10-tetracarbonsäure-dianhydrid, 6,1 g (0,05 mol) N-Benzylmethylamin und 302 g (2,5 mol) 3,5-Dimethylanilin unter kontinuierlichem Abdestillieren des bei der Reaktion abgespaltenen Wassers im schwachen Stickstoffstrom bei 180°C gerührt. Bei einer nach 6 Stunden entnommenen Probe läßt sich durch Behandlung mit heißer 5%iger Kalilauge keine Tetracarbonsäure mehr nachweisen. Von dem praktisch quantitativ gebildeten Reaktionsprodukt wird das Amingemisch durch Vakuumdestillation (−3 mbar) entfernt. Der trockene, kristalline rote Rückstand, der mit dem Produkt aus Beispiel 1 identisch ist, enthält <0,01% Amin. Gewonnen werden 148,6 g, was einer Ausbeute von 99,4% der Theorie entspricht.

Ersetzt man das 3,5-Dimethylanilin durch 321 g (3 mol) 4-Methylanilin und arbeitet im übrigen analog, so werden 142,0 g des entsprechenden blaustichigroten Reaktionsprodukts der Formel (1) mit

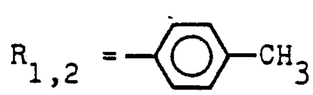

erhalten, was einer ebenfalls fast 100%igen Ausbeute der Theorie entspricht.

Beispiel 12

Eine Suspension von 19,6 g (0,05 mol) Perylen-3,4,9,10-tetracarbonsäure-dianhydrid, 25,5 g (0,2 mol) 3-Chloranilin, 25,4 g (0,2 mol) N-Butylethanolamin und 80 ml o-Dichlorbenzol werden 12 Stunden bei 160—170°C gerührt. Nach Aufarbeitung gemäß Beispiel 1 erhält man 27,8 g bordofarbenes Reaktionsprodukts der Formel (2) mit

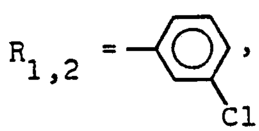

was einer Ausbeute von 91,0% der Theorie entspricht.

Vergleichsbeispiel 12a

Wiederholt man Beispiel 12, jedoch ohne Zusatz von 25,4 g N-Butylethanolamin und anstelle von 80 ml 100 ml o-Dichlorbenzol, so erhält man nur 0,1 g des gleichen Reaktionsproduktes, was einer Ausbeute von 0,3% der Theorie entspricht.

Beispiel 13

19,6 g (0,05 mol) Perylen-3,4,9,10-tetracarbonsäure-dianhydrid, 68,8 g (0,4 mol) 4-Bromanilin und 21,0 g (0,2 mol) Diethanolamin werden in 50 ml N-Methylpyrrolidon in 3 Stunden bei 160°C zur Reaktion gebracht. Das kristalline blaustichigrote Reaktionsprodukt wird gemäß Beispiel 1 isoliert. Man erhält 33,2 g der Verbindung der Formel (2) mit

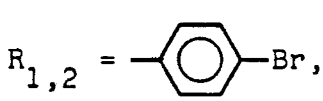

was einer Ausbeute von 94,8% der Theorie entspricht.

Vergleichsbeispiel 13a

Wiederholt man Beispiel 13, jedoch ohne Diethanolamin und unter Zusatz von 70 ml N-Methylpyrrolidon anstelle von 50 ml, so erhält man 0,5 g des gleichen Reaktionsprodukts, was einer Ausbeute von 1,4% der Theorie entspricht.

Beispiel 14

Eine Mischung aus 19,6 g (0,05 mol) Perylen-3,4,9,10-tetracarbonsäure-dianhydrid und 42,8 g (0,4 mol) 3-Methylanilin wird in Gegenwart von 24,2 g (0,2 mol) N-Benzylmethylamin in 80 ml Nitrobenzol in 2

Stunden bei 180°C umgesetzt. Nach üblicher Isolierung (vgl. Beispiel 1) werden 27,7 g des blaustichigroten Reaktionsproduktes der Formel (2) mit

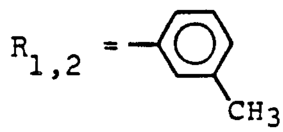

erhalten, was einer Ausbeute von 97,2% der Theorie entspricht.

Vergleichsbeispiel 14a

Wiederholt man Beispiel 14 ohne Zusatz von N-Benzylmethylamin, jedoch bei Arbeiten in 110 ml Nitrolbenzol, so erhält man praktisch kein entsprechendes Umsetzungsprodukt (<0,1 g).

Beispiel 15

Wiederholt man Beispiel 9, jedoch mit dem Unterschied, daß man anstelle von 2-(Ethylamino)-ethanol 21,8 g (0,25 mol) Morpholin einsetzt und die Reaktion bei 120°C durchführt, so werden 35,6 g des gleichen Reaktionsprodukts erhalten, was einer Ausbeute von 89,7% der Theorie entspricht.

Vergleichsbeispiel 15a

Arbeitet man wie in Beispiel 15 beschrieben, jedoch ohne Zusatz von Morpholin, so wird praktisch kein Reaktionsprodukt gebildet.

Beispiel 16

In eine Lösung von 132 g (1,1 mol) N-Benzylmethylamin und 24,2 g (0,2 mol) 3,5-Dimethylanilin werden 51,1 g (0,1 mol) Perylen-3,4,9,10-tetracarbonsäure-monoanhydrid-mono-4'-ethoxyphenylimid eingetragen und die Mischung 5,5 Stunden bei 175—180°C gerührt. Nach Aufarbeitung gemäß Beispiel 1 werden 59,5 g des asymmetrisch substituierten Diimids der Formel (1) mit

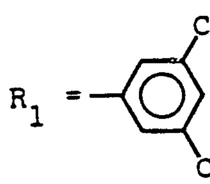

und

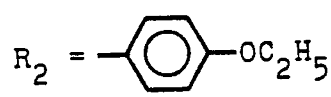

in Form rein gelbstichigroter Kristalle erhalten, was einer Ausbeute von 96,9% der Theorie entspricht.

Die Monoanhydridausgangsverbindung wurde gemäß Beispiel 4 von EP 01 22 442 hergestellt.

Beispiel 17

40,5 g (0,1 mol) Perylen-3,4,9,10-tetracarbonsäure-monoanhydrid-monomethylimid, erhalten gemäß Beispiel 1 der DE—OS 3 017 185, werden in 126 g (1,2 mol) Diethanol-amin nach Zusatz von 42,8 g (0,4 mol) p-Toluidin in 1 Stunde bei 190°C umgesetzt. Die Isolierung des blaustichigroten Reaktionsproduktes der Formel (1) mit

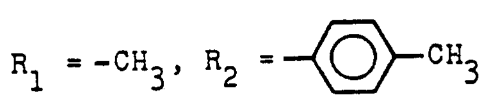

erfolgt entsprechend den Angaben von Beispiel 1.

Es werden 48,5 g erhalten, was einer Ausbeute von 98,2% der Theorie entspricht.

Beispiel 18

In einem Gemisch aus 42,0 g (0,4 mol) Diethanolamin und 145,2 g (1,2 mol) 3,5-Dimethylanilin werden 49,5 g (0,1 mol) des gemäß Beispiel 1 von EP 01 22 442 hergestellten Perylen-3,4,9,10-tetracarbonsäure-monoanhydrid-mono-3',5'-dimethylphenylimids in einer Stunde bei 180°C zum entsprechenden Diimid umgesetzt, welches mit der β-Modifikation des gemäß Beispiel 2 erhaltenen Produktes identisch ist.

Gewonnen werden 58,8 g des Reaktionsprodukts in Form leuchtend scharlachfarbener, Kristalle, was einer Ausbeute von 98,3% der Theorie entspricht.

Beispiel 19

39,2 g (0,1 mol) Perylen-3,4,9,10-tetracarbonsäure-dianhydrid werden mit 69,0 g (0,5 mol) 4-Nitroanilin

in 103 g (1 mol) Propylethanolamin in 4 Stunden bei 155—160°C zum bordofarbenen Diimid der Formel (1) mit

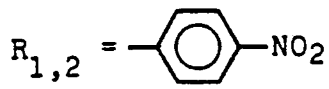

kondensiert.

Gewonnen werden 55,3 g Reaktionsprodukt, was einer Ausbeute von 87,5% de Theorie entspricht.

Beispiel 20

Durch Umsetzung von 19,6 g (0,05 mol) Perylen-3,4,9,10-tetracarbonsäure-dianhydrid mit 70,8 g (0,5 mol) 5-Chlor-2-methyl-anilin in Gegenwart von 18,8 g (0,25 mol) Mono-methylethanolamin werden nach einer Reaktionsdauer von 12 Stunden bei 150—160°C 25,3 g des roten Reaktionsproduktes der Formel (1) mit

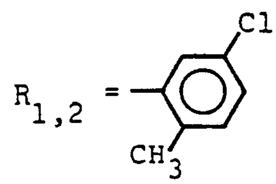

erhalten, was einer Ausbeute von 79,2% der Theorie entspricht.

Beispiel 21

Ein Gemisch aus 19,6 g (0.05 mol) Perylen-3,4,9,10-tetracarbonsäure-dianhydrid, 49,0 g (0,2 mol) 3-Aminobenzanthron und 78,5 g (0.67 mol) N-Butylethanolamin wird 4 Stunden bei 190°C gerührt. Anschließend wird bei 140°C mit 200 ml Dimethylformamid verdünnt, bei Raumtemperatur abgesaugt, mit Dimethylformamid und Methanol gewaschen und der methanolfeuchte Filterkuchen mit heißer 5%iger Kaliumhydroxidlösung behandelt. Nach üblicher Isolierung werden 55,3 g dunkelrotes Reaktionsprodukt der Formel (1) mit

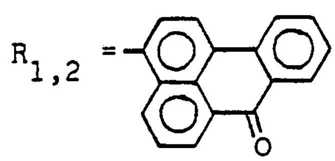

erhalten, was einer Ausbeute von 65,4% der Theorie entspricht.

**Patentansprüche**

1. Verfahren zur Herstellung von Perylen-3,4,9,10-tetracarbonsäurearylimiden der Formel (1)

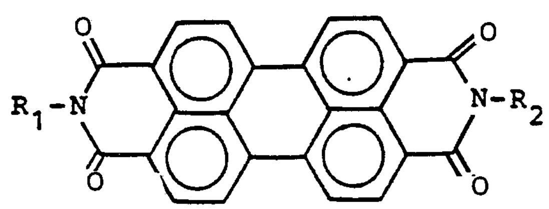

(1)

in welcher $R_1$ einen Arylrest bedeutet, der am aromatischen Kern durch Alkyl-, Cycloalkyl-, Alkoxy-, Aryloxy-, Arylazo- oder Nitrogruppen oder Halogenatome substituiert sein kann, und $R_2$ ein Wasserstoffatom oder einen Alkyl$_{C_1-C_8}$ oder Arylrest der am aromatischen Kern durch Alkyl-, Cycloalkyl-, Alkoxy-, Aryloxy-, Arylazo- oder Nitrogruppen oder Halogenatome substituiert sein kann, bedeuten, wobei $R_1$ und $R_2$, falls beide einen Arylrest bedeuten, gleich oder verschieden sein können, dadurch gekennzeichnet, daß man Perylen-3,4,9,10-tetracarbonsäure-dianhydrid oder ein Perylen-3,4,9,10-tetracarbonsäure-monoanhydrid-monoimid der Formel (2)

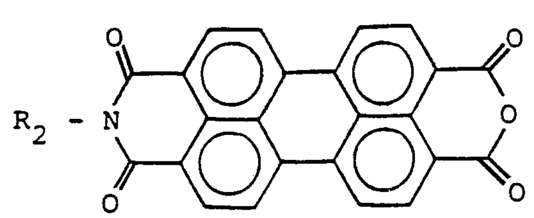

(2)

in welcher $R_2$ die vorstehend genannte Bedeutung hat, mit einem primären Arylamin der Formel (3)

$$R_1—NH_2 \qquad (3)$$

in welcher $R_1$ die vorstehend genannte Bedeutung hat, in Gegenwart von Dialkylaminen der Formel (4)

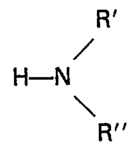

(4)

in welcher R', R'' gleiche oder verschiedene geradkettige $Alkyl_{C_1-C_6}$ oder verzweigte $Alkyl_{C_3-C_6}$ oder $Cycloalkyl_{C_5-C_6}$ gruppen bedeuten, die gegebenenfalls substituiert sind durch Hydroxy-, $Alkoxy_{C_1-C_4}$, $Alkyl_{C_1-C_4}$ amino-, Phenyl- oder Naphthylgruppen, die am aromatischen Kern durch $Alkyl_{C_1-C_4}$, $Alkoxy_{C_1-C_4}$ oder $Alkyl_{C_1-C_4}$ aminogruppen oder Halogenatome substituiert sein können, oder worin R' und R'' gemeinsam mit dem Stickstoffatom einen 5- oder 6-gliedrigen heterocyclischen Ring bilden, welcher ein Sauerstoffatom oder ein weiteres Stickstoffatom enthalten kann, bei Temperaturen von 100°C bis 300°C kondensiert.

2. Verfahren nach Anspruch 1, dadurch gekennzeichnet, daß man die Kondensation in Gegenwart von Diethanolamin, $Alkyl_{C_1-C_6}$ ethanolamin, N-Benzylmethylamin, N-Benzylethylamin, Pyrrolidin, Morpholin, Piperidin, 2-Ethylpiperidin, Piperazin oder N-Methylpiperazin als Dialkylamin der Formel (4) durchführt.

3. Verfahren nach Anspruch 1, dadurch gekennzeichnet, daß man die Kondensation in Gegenwart eines Dialkylamins der Formel (4) mit einem Siedepunkt von etwa 100°C bis etwa 300°C durchführt.

4. Verfahren nach Anspruch 1—3, dadurch gekennzeichnet, daß man die Kondensation in Gegenwart von 0,1—5 mol eines Dialkylamins der Formel (4) pro mol Perylen-3,4,9,10-tetracarbonsäure-dianhydrid oder Perylen-3,4,9,10-tetracarbonsäure-monoanhydrid-monoimid durchführt.

5. Verfahren nach Anspruch 1—4, dadurch gekennzeichnet, daß man das Reaktionsprodukt nach beendeter Reaktion durch Abdestillieren der flüchtigen Bestandteile des Reaktionsgemisches isoliert.

**Revendications**

1. Procédé pour préparer des arylimides de l'acide pérylène-tétracarboxylique-3,4,9,10 répondant à la formule (1):

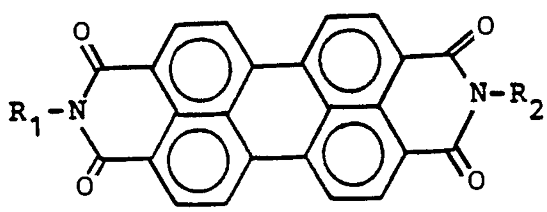

(1)

dans laquelle

$R_1$ représente un radical aryle dont le noyau aromatique peut porter des radicaux alkyles, cyclo-alkyles, alcoxy, aryloxy, arylazo ou nitro ou des atomes d'halogènes, et

$R_2$ représente un atome d'hydrogène, un radical alkyle en $C_1—C_8$ ou un radical aryle dont le noyau aromatique peut porter des radicaux alkyles, cyclo-alkyles, alcoxy, aryloxy, arylazo ou nitro ou des atomes d'halogènes, les symboles $R_1$ et $R_2$, dans le cas où ils représentent en même temps chacun un radical aryle, pouvant avoir la même signification ou des significations différentes, procédé caractérisé en ce qu'on condense le dianhydride de l'acide pérylène-tétracarboxylique-3,4,9,10, ou un mono-imide mono-anhydride de l'acide pérylène-tétracarboxylique-3,4,9,10 répondant à la formule (2):

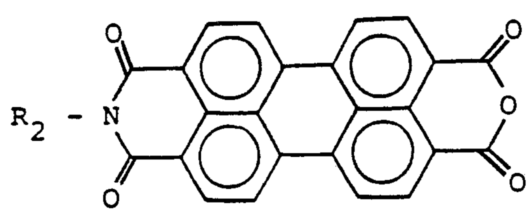

(2)

dans laquelle $R_2$ a la signification qui lui a été donnée ci-dessus, avec une arylamine primaire répondant à la formule (3):

$$R_1—NH_2 \qquad (3)$$

dans laquelle $R_1$ a la signification qui lui a été donnée ci-dessus, en présence de dialkylamines répondant à la formule (4)

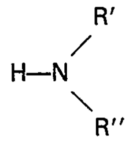

(4)

dans laquelle R′ et R″ représentent chacun, indépendamment l'un de l'autre, un alkyle en $C_1$—$C_6$ linéaire, un alkyle en $C_2$—$C_6$ ramifié ou un cyclo-alkyle en $C_5$ ou $C_6$, chacun de ces radicaux pouvant porter, comme substituants, les radicaux hydroxy, $\text{alcoxy}_{C_1-C_4}$ ou $\text{alkyl}_{C_1-C_4}$ amino ou des radicaux phényles ou naphtyles dont le noyau aromatique peut lui même porter des alkyles en $C_1$—$C_4$, des alcoxy en $C_1$—$C_4$, des $\text{alkyl}_{C_1-C_4}$ amino ou des atomes d'halogènes, ou R′ et R″ forment ensemble, et avec l'atome d'azote, un radical hétérocyclique à 5 ou 6 maillons qui peut contenir un atome d'oxygène ou un atome d'azote supplémentaire, à des températures de 100 à 300°C.

2. Procédé selon la revendication 1 caractérisé en ce qu'on effectue la condensation en présence de diéthanolamine, d'une alkyl-éthanolamine à alkyle en $C_1$—$C_6$, de N-benzyl-méthylamine, de N-benzyl-éthylamine, de pyrrolidine, de morpholine, de pipéridine, d'éthyl-2 pipéridine, de pipérazine ou de N-méthyl-pipérazine, comme dialkylamine de formule (4).

3. Procédé selon la revendication 1 caractérisé en ce qu'on effectue la condensation en présence d'une dialkylamine de formule (4) qui a un point d'ébullition compris entre environ 100°C et environ 300°C.

4. Procédé selon l'une quelconque des revendications 1 à 3, caractérisé en ce qu'on effectue la condensation en présence de 0,1 à 5 mol d'une dialkylamine de formule (4) par mole du dianhydride de l'acide pérylène-tétracarboxylique-3,4,9,10 ou du mono-anhydride mono-imide de l'acide pérylène-tétracarboxylique-3,4,9,10.

5. Procédé selon l'une quelconque des revendications 1 à 4, caractérisé en ce qu'on isole le produit réactionnel, après la fin de la réaction, en éliminant par distillation les constituants volatils du mélange réactionnel.

**Claims**

1. A process for the preparation of arylimides of perylene-3,4,9,10-tetracarboxylic acid, of the formula (1)

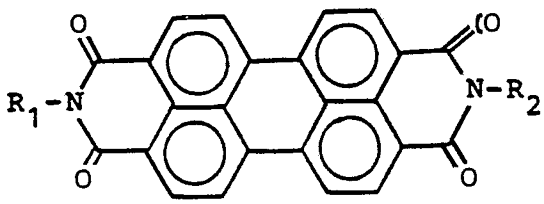

(1)

in which $R_1$ denotes an aryl radical which can be substituted on the aromatic nucleus by alkyl, cycloalkyl, alkoxy, aryloxy, arylazo or nitro groups or halogen atoms, and $R_2$ denotes a hydrogen atom or an $\text{alkyl}_{C_1-C_8}$ or aryl radical, which can be substituted on the aromatic nucleus by alkyl, cycloalkyl, alkoxy, aryloxy, arylazo or nitro groups or halogen atoms, it being possible for $R_1$ and $R_2$, if both denote an aryl radical, to be identical or different, which comprises condensation, at temperatures from 100°C to 300°C, of perylene-3,4,9,10-tetracarboxylic dianhydride or a perylene-3,4,9,10-tetracarboxylic monoanhydride monoimide of the formula (2)

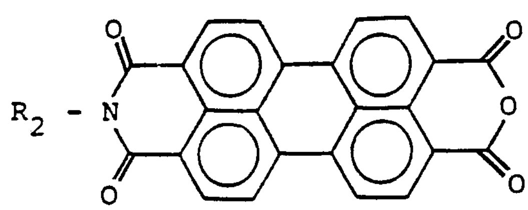

(2)

in which $R_2$ has the abovementioned meaning, with a primary arylamine of the formula (3)

$$R_1—NH_2 \qquad (3)$$

in which $R_1$ has the abovementioned meaning, in the presence of dialkylamines of the formula (4)

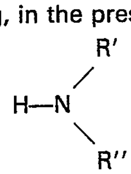

(4)

in which R′ and R′′ denote identical or different straight-chain alkyl$_{\overline{C_1—C_6}}$ or branched alkyl$_{\overline{C_3—C_6}}$ or cycloalkyl$_{\overline{C_5—C_6}}$ groups, which are optionally substituted by hydroxyl, alkoxy$_{\overline{C_1—C_4}}$, alkyl$_{\overline{C_1—C_4}}$-amino, or phenyl or naphthyl groups which can be substituted on the aromatic nucleus by alkyl$_{\overline{C_1—C_4}}$, alkoxy$_{\overline{C_1—C_4}}$ or alkyl$_{\overline{C_1—C_4}}$-amino groups or halogen atoms, in which R′ and R′′ form, together with the nitrogen atom, a 5- or 6-membered heterocyclic ring, which can contain an oxygen atom or another nitrogen atom.

2. The process as claimed in claim 1, wherein the condensation is carried out in the presence of diethanolamine, alkyl$_{\overline{C_1—C_6}}$-ethanolamine, N-benzylmethylamine, N-benzylethylamine, pyrrolidine, morpholine, piperidine, 2-ethylpiperidine, piperazine or N-methylpiperazine as the dialklamine of the formula (4).

3. The process as claimed in claim 1, wherein the condensation is carried out in the presence of a dialkylamine of the formula (4) with a boiling point from about 100°C to about 300°C.

4. The process as claimed in any of claims 1—3, wherein the condensation is carried out in the presence of 0.1—5 mol of a dialkylamine of the formula (4) per mol of perylene-3,4,9,10-tetracarboxylic dianhydride or perylene-3,4,9,10-tetracarboxylic mono-anhydride monoimide.

5. The process as claimed in any of claims 1—4, wherein, after reaction is complete, the reaction product is isolated by removal of the volatile constituents of the reaction mixture by distillation.